# FASCICULE DE BREVET EUROPEEN

(11) **EP 1 471 212 B1**
(45) Date de publication et mention de la délivrance du brevet: **28.09.2011**
(21) Numéro de dépôt: 04291033.1
(22) Date de dépôt: 20.04.2004
(51) Int. Cl.: F01D 11/12, F01D 25/28, B29C 63/28, B29C 63/34, B29C 65/00, B23P 6/00

(54) **Procédé pour remplacer un abradable sur le carter de soufflante d'un turboréacteur**
Verfahren zum Ersetzen einer abreibbaren Beschichtung für das Bläsergehäuse einer Gasturbine
Method to replace an abradable layer on a gas turbine fan casing

(30) Priorité: 22.04.2003 FR 0304906
(43) Date de publication de la demande: 27.10.2004
(73) Titulaire: SNECMA, 75015 Paris (FR)
(72) Inventeur: Le Saint, Jacques, 78890 Garancieres (FR); Verrieres, Alain, 92120 Montrouge (FR); Ponsen, François, 77176 Nandy (FR); Hamel, Yannick, 91120 Palaiseau (FR)
(74) Mandataire: Joly, Jean-Jacques

(56) Documents cités:
- EP-A- 0 753 376
- FR-A- 2 540 599
- US-A- 5 451 351

## Description

### Domaine technique de l'invention

L'invention se rapporte à la maintenance des turboréacteurs et plus particulièrement à un procédé pour remplacer un abradable endommagé sur le carter de soufflante de ce turboréacteur.

### Etat de la technique et problème à résoudre

Le remplacement d'un abradable sur le carter de soufflante d'un turboréacteur est habituellement effectué selon le procédé suivant :
1. Dépose du cône d'entrée d'air et de l'étage de soufflante.
2. Elimination mécanique de l'abradable endommagé.
3. Préparation des surfaces à coller.
4. Collage contre le carter d'un nouvel abradable par la technique de collage des matériaux composite dite " sac à vide " consistant à recouvrir l'abradable par une poche à vide souple, ou "sac", bordé de joints d'étanchéité avec le carter, l'espace entre la bande abradable et le film souple étant comblé par un tissu de pompage et le tout connecté à une source de dépression d'air, un apport de chaleur étant effectué par de l'air chaud ou une ceinture électrique chauffante pour assurer le cycle thermique nécessaire au collage.
5. Refroidissement, élimination du tissu de pompage, enlèvement du sac, des joints d'étanchéité, etc.
6. Usinage du nouvel abradable à l'aide d'un outillage spécifique adapté directement sur le disque de soufflante assemblé.

Cette technologie encore acceptable avec les petits carters devient longue et délicate avec les carters des gros turboréacteurs, ces carters atteignant aujourd'hui trois mètres de diamètre. Il devient très difficile de mettre en place la poche à vide et d'assurer l'étanchéité des joints entre le film souple et le carter, car :
- les joints ont une très grande longueur comparée au volume entre le film souple et le carter ;
- il faut obturer parfaitement de nombreux trous de fixation dans le carter, ces trous servant à attacher au carter par des vis les panneaux acoustiques du moteur ;
- la pose de la poche à vide devient hasardeuse ;
- l'obtention du vide à l'intérieur de cette poche nécessite beaucoup de précautions et des moyens spécifiques coûteux et de mise en oeuvre délicate.

Cette technologie présente également l'inconvénient de n'autoriser qu'une faible pression sur l'abradable contre le carter, cette compression étant le différentiel entre la pression atmosphérique et le vide relatif régnant à l'intérieur de la poche à vide.

Une autre difficulté présentée par cette technologie est de maîtriser la température à laquelle le collage est effectué, car les fuites thermiques sont importantes aussi bien par conduction dans la matière du carter que par convection avec l'air ambiant, ces fuites thermiques devenant très importantes avec les gros carters.

Un premier problème à résoudre est de proposer un procédé simple et économique pour remplacer un abradable sur le carter de soufflante d'un turboréacteur assemblé sous l'aile de l'avion, la taille du carter ne devant pas être un handicap.

Un second problème à résoudre est de maîtriser le cycle complet de polymérisation de l'adhésif.

### Exposé de l'invention

L'invention propose un procédé selon la revendication 1 pour remplacer un abradable sur le carter de soufflante d'un turboréacteur,
le turboréacteur comportant une partie tournante d'axe géométrique, cette partie tournante comportant elle-même un arbre à l'avant duquel est attaché un étage de soufflante comportant lui-même un moyeu supportant une pluralité d'aubes,
le turboréacteur comportant également un carter de soufflante annulaire entourant l'étage de soufflante, ce carter de soufflante comportant une paroi interne contre laquelle est collé un abradable également annulaire, des surfaces de collage de l'abradable et du carter de soufflante, la surface de l'abradable opposée à sa surface de collage étant appelée surface d'étanchéité, le carter de soufflante comportant une pluralité de points de fixation, l'étage de soufflante ayant été préalablement déposé.

Ce procédé comporte les opérations suivantes :
a. élimination mécanique de l'abradable usagé ;
b. préparation d'un nouvel abradable ;
c. encollage des surfaces, du carter de soufflante, ces surfaces de collage ayant préalablement été nettoyées et rugosifiées, c'est à dire rendues rugueuses, par abrasion ;
d. application de l'abradable contre la paroi interne du carter de soufflante,
e. mise en place d'une ceinture chauffante dite "interne" contre la surface d'étanchéité de l'abradable, la ceinture chauffante interne recouvrant complètement l'abradable ;
f. mise en place contre la ceinture chauffante interne de secteurs de maintien comportant chacun une vessie gonflable, l'abradable et la ceinture chauffante interne étant intégralement pris en sandwich entre le carter de soufflante et les vessies, les secteurs de maintien étant eux-mêmes maintenus en place par une pluralité de brides attachées au carter de soufflante par les points de fixation ;
g. raccordement des vessies à une source commune de pression d'air et raccordement de la ceinture chauffante interne à une alimentation électrique, mise en pression des vessies et chauffage de la colle selon un cycle aux conditions de température et de pression adapté à la colle utilisée et à la conductibilité thermique du carter de soufflante ;
h. refroidissement et enlèvement des secteurs de maintien et de la ceinture chauffante interne.

On comprend que l'utilisation des secteurs de maintien et des vessies par dessus la ceinture chauffante permet de mettre progressivement en place des moyens pour comprimer l'abradable à coller contre le carter et pour assurer le chauffage de la colle et des surfaces de collage. Le collage se fait à l'air ambiant et ne nécessite pas la mise en place de moyens d'étanchéité. Les secteurs de maintien équipés de leurs vessies sont mis en place séparément, les uns après les autres. Cette opération est donc simple, économique et facile à mettre en oeuvre, même avec les gros turboréacteurs, ce qui résout le premier problème.

Avantageusement, le carter de soufflante comportant une paroi externe, on dispose au moins une ceinture chauffante dite "externe" sur la paroi externe au droit de l'abradable, la ceinture chauffante externe faisant le tour du carter de soufflante et entourant ainsi l'abradable, cette ceinture chauffante externe étant connectée à une source d'alimentation électrique et chauffée et régulée pendant le cycle thermique.

On comprend que la ceinture chauffante externe apporte de la chaleur à la colle et aux surfaces de collage à travers le carter, c'est à dire de la paroi externe du carter vers la paroi interne. Ce chauffage s'oppose donc aux fuites thermiques en sens inverse et permet par conséquent de mieux maîtriser la température de la colle et des surfaces de collage, ce qui résout le second problème.

Ce procédé permet donc d'opérer sur un turboréacteur "avionné" c'est à dire sous l'aile de l'avion, et ceci quelles que soient les conditions de température extérieure. Ce procédé est bien évidemment applicable également aux moteurs déposés.

### Description des figures

L'invention sera mieux comprise et les avantages qu'elle procure apparaîtront plus clairement au vu d'un exemple détaillé de réalisation et des figures associées.

La figure 1 illustre un turboréacteur à double flux par une vue en coupe selon AA sur la figure 3.

La figure 2 illustre le collage de l'abradable par une vue en coupe également selon AA sur la figure 3.

La figure 3 illustre le cercle formé par quatre secteurs de maintien avec les brides et les vis par une vue selon BB sur la figure 2.

### Description détaillée

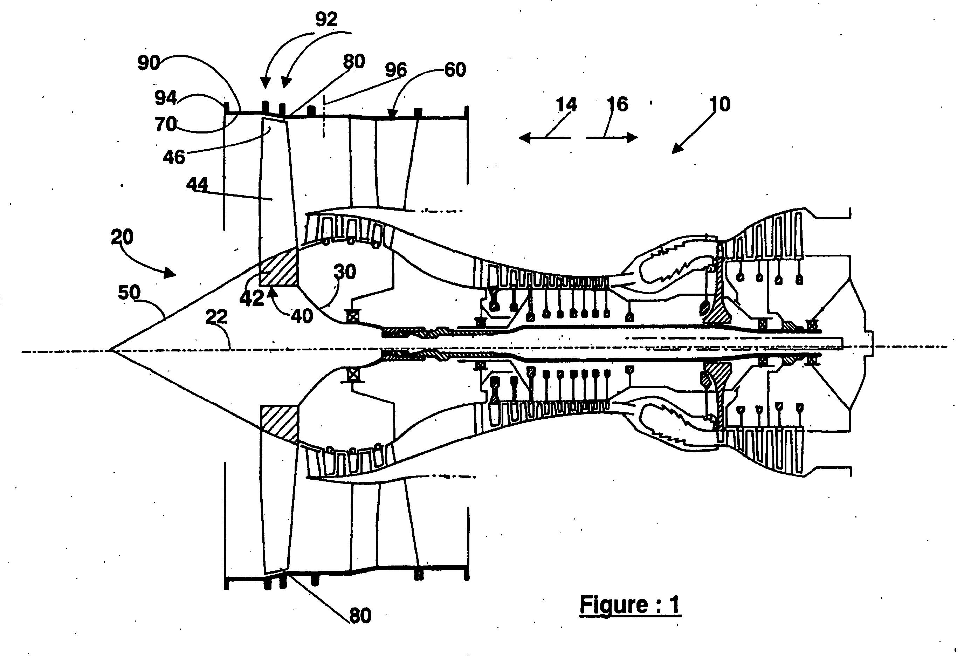

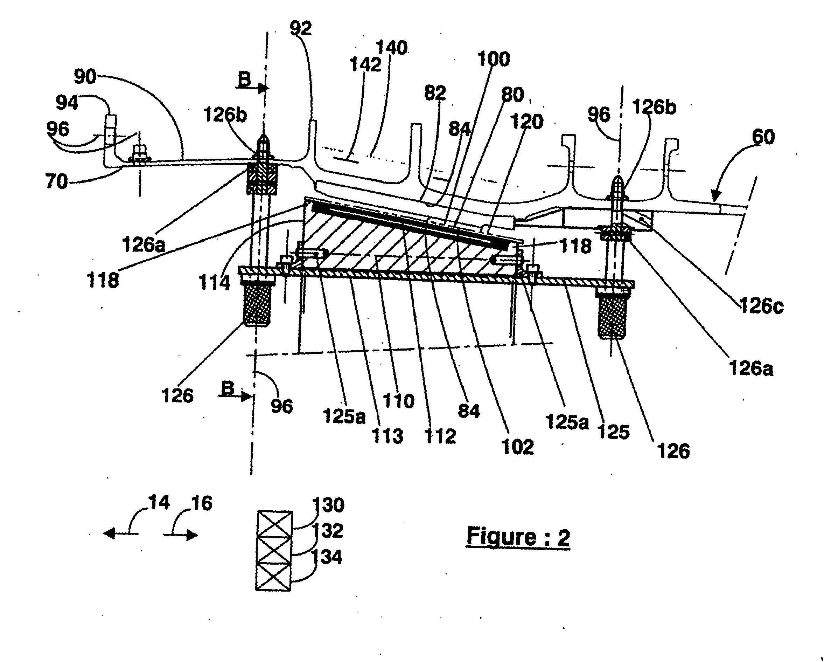

On se reportera en premier lieu simultanément aux figures 1 et 2. Par mesure de clarté, on référencera 14 l'avant du turboréacteur 10 et 16 l'arrière de ce turboréacteur 10. Le turboréacteur 10 est du type à double flux et il comporte une partie tournante 20 d'axe géométrique 22 comportant notamment un arbre 30 et un étage de soufflante 40 attaché par son moyeu 42 à l'avant de l'arbre 30, ce moyeu 42 supportant une pluralité d'aubes 44 dont la partie la plus éloignée du moyeu 42 est appelé sommet 46. La partie tournante 20 comporte également un cône d'entrée d'air 50 attaché à l'avant 14 du moyeu 42.

Le turboréacteur 10 comporte également à l'avant 14 un carter de soufflante 60 annulaire entourant l'étage de soufflante 40 et ouvert à l'avant 14. Le carter de soufflante 60 est fixe, centré sur l'axe géométrique 22 et de forme sensiblement cylindrique. Le carter de soufflante 60 comporte une paroi interne 70 contre laquelle est collée un abradable 80 annulaire entourant les aubes 44 et formant avec les sommets 46 de ces aubes 44 un jeu réduit. On référencera 82 et 86 respectivement la surface de collage de l'abradable 80 et la surface de collage de la paroi interne 70. On référencera également 84 la surface d'étanchéité de l'abradable 80 en regard des sommets 46 des aubes 44, la surface d'étanchéité 84 étant par conséquent opposée à la surface de collage 82 de l'abradable 80.

Le carter de soufflante 60 comporte également une paroi externe 90 sur laquelle sont habituellement disposés en saillie des renforts annulaires 92, ces renforts annulaires 92 étant notamment disposés au droit de l'abradable 80 et donc des aubes 44 afin de renforcer localement le carter de soufflante 40 en cas de rupture d'aubes 44. Le carter de soufflante 60 comporte également à l'avant 14 une bride avant 94 annulaire par laquelle est attachée la nacelle non représentée entourant le turboréacteur 10. Le carter de soufflante 60 comporte également une pluralité de points de fixation 96 constitués habituellement par des bossages percés de trous taraudés débouchants, ces points de fixation 96 étant aménagés dans la bride avant 94 et dans la paroi externe 90 en fonction de la disposition des éléments à attacher au carter de soufflante 60.

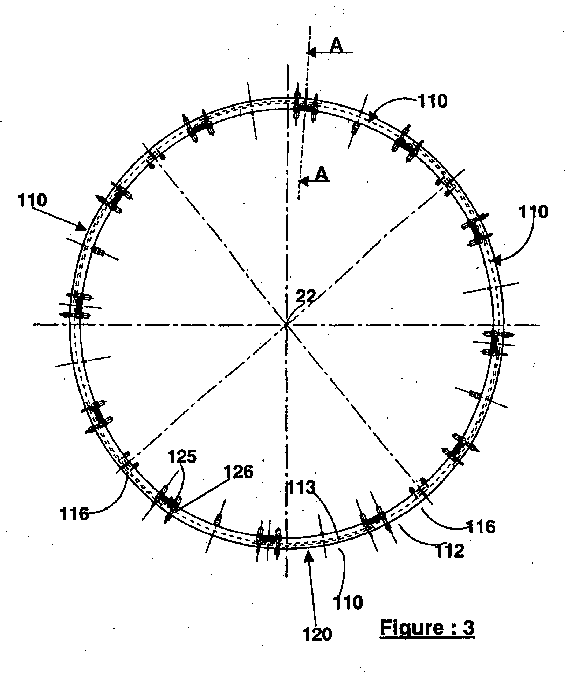

On se reportera maintenant simultanément aux figures 2 et 3 et on décrira maintenant le procédé pour réparer l'abradable 80 du carter de soufflante 60, le turboréacteur étant soit accroché à l'aile de l'aéronef, soit disposé horizontalement sur un berceau non représenté. Le procédé de réparation comporte les opérations suivantes :
1) Dépose du cône avant d'entrée d'air 50, celui-ci étant habituellement vissé sur la bride annulaire non représentée à l'avant 14 du cône arrière 42 de l'étage de soufflante 40.
2) Dépose du cône arrière de l'étage de soufflante 40, celui-ci étant habituellement vissé sur une bride annulaire non représentée à l'avant 14 du disque de soufflante 40.
3) Dépose des aubes de soufflante
4) Dépose des panneaux acoustiques avant et arrière
   L'abradable est maintenant accessible par l'avant 14 du carter de soufflante 60.
5) Enlèvement de l'abradable 80 usagé soit par des moyens mécaniques portatifs pneumatiques ou électro-pneumatiques, soit directement à l'aide d'une fraiseuse portable montée sur l'étage de soufflante 40.
6) Préparation de la bande du nouvel abradable 80.
7) Ponçage, nettoyage de l'abradable 80 et des surfaces de collage 86 du carter de soufflante 60 et encollage des surfaces de collage 86 du carter de soufflante 60. A noter que ce ponçage et ce nettoyage ne doit pas être effectué plus de deux à trois heures avant l'encollage afin que les surfaces à encoller soit parfaitement propres et désoxydées.
8) Mise en place de l'abradable 80 contre la paroi interne 70 du carter de soufflante 60, les surfaces de collage 82 et 86 étant l'une contre l'autre. Pendant cette opération, on élimine les bulles d'air et de l'excès de colle par tapotage avec un maillet de l'abradable 80 contre la paroi interne 70 et par enlèvement avec une spatule de la colle qui déborde de l'abradable 80. Pendant cette étape, il peut être pratique de maintenir en place l'abradable 80 contre la paroi interne 70 à l'aide de bandes adhésives.
9) Mise en place d'une ceinture chauffante 100 dite "interne" contre la surface d'étanchéité 84 de l'abradable 80, la ceinture chauffante interne 100 recouvrant complètement l'abradable 80. La ceinture chauffante interne 100 est de préférence constituée d'un ruban mince et souple à la forme de l'abradable 80 à recouvrir, ce ruban supportant une résistance électrique chauffante régulièrement répartie sur sa surface, la ceinture chauffante interne 100 recouvrant l'abradable 80 sur toute la circonférence afin de chauffer uniformément l'abradable.
   Afin de mieux maîtriser la température de collage, la ceinture chauffante interne 100 intègre au moins une sonde de température interne 102 dite de régulation.
10) Mise en place contre la ceinture chauffante interne 100 de secteurs de maintien 110 rigides et de vessies 120, l'empilement constitué successivement par l'abradable 80, la ceinture chauffante interne 100 et les vessies 120 étant intégralement pris en sandwich entre le carter de soufflante 60 et les secteurs de maintien 110, le terme intégralement signifiant sur toute la circonférence de l'abradable 80. Les secteurs de maintien 110 sont eux-mêmes maintenus en place par une pluralité de brides 125 attachées par des vis 126 au carter de soufflante 60 en les points de fixation 96. En pratique, l'opérateur commence par mettre en place le secteur du haut et ensuite les secteurs latéraux afin que ceux-ci puissent, pendant le montage, être appuyés sur les secteurs déjà montés. La forme des brides 125 est évidemment très variable et adaptée à la forme du carter de soufflante 60 et aux emplacements des points de fixation 96 sur ce carter. Cette disposition est bien adaptée aux grands carters car chaque secteur de maintien 110 peut être mis en place et fixé au carter séparément. Ces secteurs de maintien sont de préférence au nombre de trois afin de limiter les opérations de mise en place. Dans le cas des carters de grand diamètre, ces secteurs de maintien peuvent être plus nombreux, donc plus petits et plus légers, pour en faciliter les manipulations. Lorsque tous les secteurs de maintien 110 sont assemblés, ils forment une circonférence avec un jeu entre les extrémités 116 juste suffisant pour permettre la mise en place et le retrait de ces secteurs.
   Plus précisément, chaque secteur de maintien 110 a une forme générale en arc de cercle dont on référencera 112, 113, 114 et 116 respectivement la surface convexe, la surface concave opposée à la surface convexe 112, les faces latérales et les extrémités. Chaque secteur de maintien 110 appuie par sa surface convexe 112 une vessie 120 contre la ceinture chauffante interne 100 et l'abradable 80. Les secteurs de maintien 110 comportent également des joues 118 dans le prolongement des surfaces latérales 114, ces joues 118 faisant saillie sur la surface convexe 112 et emprisonnant latéralement les vessies 120 disposées contre la surface convexe 112.
   Plus précisément également, les brides 125 sont attachées aux secteurs de maintien 110 par un jeu d'équerres, de vis et de goujon 125a, ces brides 125 étant elles-mêmes attachées au carter 60 par des vis 126, des cales d'épaisseur 126a et des écrous 126b, le carter 60 étant serré aux points de fixation utilisés 96 entre les cales d'épaisseur 126a et les écrous 126b. Les vis 126 à l'arrière 16 des secteurs de maintien 110 s'ajustent radialement dans des butées 126c arrivant en appui à l'arrière 16 de l'abradable 80, la surface de collage 86 formant dans la paroi interne 70 une empreinte limitant le mouvement de l'abradable 80 vers l'avant 14 ou vers l'arrière 16. Le gonflage des vessies 120 crée sur les secteurs de maintien 110 une force vers l'avant 14 tendant à les expulser vers l'avant 14. Afin d'empêcher l'expulsion des secteurs de maintien 110, cette force est reprise successivement par les moyens de liaison 125a, les brides 125, les vis 126 ajustées dans les butées 126c et l'abradable 80 dans la surface de collage 86 formant une empreinte dans le carter 60.
11) Disposer au moins une ceinture chauffante 140 dite "externe" sur la paroi externe 90 au droit de l'abradable 80, la ceinture chauffante externe 140 faisant le tour du carter de soufflante 60 et entourant ainsi l'abradable 80. Disposer également entre la ceinture chauffante externe 140 et la paroi externe 90 du carter 60 au moins une sonde de température. Les ceintures chauffantes externes 140 peuvent être maintenues contre le carter 60 par des bandes adhésives. Lorsque des renforts annulaires 92 sont présents au droit de l'abradable 80, on disposera plusieurs ceintures chauffantes externes 140 à coté et entre ces renforts annulaires 92 afin de bien couvrir tout l'abradable 80.
12) Connexion des vessies à une source commune de pression d'air régulée 130, cette source de pression d'air 130 étant commune afin de gonfler les vessies avec une pression identique. Connexion également de la ceinture chauffante interne 100 et des ceintures chauffantes externes 140 à des alimentations électriques 132. Connexion enfin des sondes de température internes et externes 102, 142 à des moyens de mesure et de régulation de températures.
13) Mise en pression des vessies 120 et conduite d'un cycle thermique approprié à la colle utilisée. Dans cet exemple, la colle utilisée porte le nom commercial RTV 147A/147B, les vessies 120 sont gonflées à 1 bar, et la colle et les surfaces de collage 82, 86 sont portées à une température de 105°C / 130°C pendant 2 heures.
14) Refroidissement, dégonflage des vessies, déconnexion et enlèvement des secteurs de maintien 110, des vessies 120, des ceintures chauffantes 100, 140 et des sondes de températures 102, 142.
15) Usinage de la surface d'étanchéité 84 de l'abradable 80 à l'aide d'une fraiseuse attachée à l'arbre 30, la rotation de la fraiseuse attaché à l'arbre 30 permettant de donner à la surface d'étanchéité 84 une forme rigoureusement circulaire centrée sur l'axe géométrique 22.

La pression exercée par les vessies sur l'abradable à coller est reprise :
- par les brides 125 liées au support de vessies ;
- Par les vis 126 qui les attachent au carter.

Lorsque les vessies 120 sont mises en pression, elles arrivent en contact bout à bout pour former une circonférence continue contre l'abradable 80 à coller. Des mesures effectuées ont montré que la chute de la pression exercée par les vessies 120 sur l'abradable 80 reste inférieure à 10% au droit du contact entre deux vessies adjacentes, ce qui reste acceptable. A noter que les joues 118 permettent de contenir les vessies 120 entre les secteurs de maintien 110 et l'abradable lorsque ces vessies sont en pression.

La ceinture interne chauffante 102 est suffisante pour chauffer la colle, mais les fuites thermiques par la matière du carter 60 et par l'air ambiant autour de ce carter (travail en extérieur - sous l'aile de l'avion entre autres) rendent incertain l'ajustement de la température de collage. Dans ce cas, on peut disposer autours du carter 60 une seconde source de chaleur sous la forme d'une ou plusieurs ceintures chauffantes externes 140 selon la configuration du carter 60 et la présence et la disposition de renforts annulaires 92. Ainsi, le contrôle simultané de la température de la ceinture chauffante interne 100 et de la température de la ceinture chauffante externe 140 permet de contrôler efficacement la température de la colle dans l'espace situé entre la ceinture chauffante interne 100 et la ceinture chauffante externe 140.

Par exemple, pour assurer un collage à la température de 85°C requise pour une colle de nom commercial RTV 147A, la température de la ceinture chauffante interne 100 mesurée avec les sondes de température interne 102 est régulée à 120°C, alors que la température de la ceinture chauffante externe 140 mesurée avec les sondes de température externe 142 est régulée à 90°C, ces deux températures devant être déterminées expérimentalement pour chaque modèle de carter. A noter que l'essentiel de la chaleur pour la polymérisation est apporté par la ceinture chauffante interne 100 et que la ceinture chauffante externe 140 a plutôt un rôle d'appoint.

## Revendications

1. Procédé pour remplacer un abradable sur le carter de soufflante d'un turboréacteur, le turboréacteur (10) comportant une partie tournante (20) d'axe géométrique (22), cette partie tournante (20) comportant elle-même un arbre (30) à l'avant duquel est attaché un étage de soufflante (40) comportant lui-même un moyeu (42) supportant une pluralité d'aubes (44),
le turboréacteur (10) comportant également un carter de soufflante (60) annulaire entourant l'étage de soufflante (40), ce carter de soufflante (60) comportant une paroi interne (70) contre laquelle est collé un abradable (80) également annulaire, des surfaces de collage (82, 86) de l'abradable (80) et du carter de soufflante (60) une surface d'étanchéité (84) de l'abradable (80) opposée à sa surface de collage (82), le carter de soufflante (60) comportant une pluralité de points de fixation (96), l'étage de soufflante (40) ayant été préalablement déposé,
comportant les opérations suivantes :
a. enlèvement de l'abradable (80) usagé ;
b. préparation d'un nouvel abradable (80) ;
c. encollage des surfaces de collage (86) du carter de soufflante (60), ces surfaces de collage (82, 86) ayant préalablement été nettoyées ;
d. application de l'abradable (80) contre la paroi interne (70) du carter de soufflante (60), **caractérisé en ce qu'**il comporte en outre les opérations suivantes :
e. mise en place d'une ceinture chauffante (100) dite "interne" contre la surface d'étanchéité (84) de l'abradable (80), la ceinture chauffante interne (100) recouvrant complètement l'abradable (80);
f. mise en place contre la ceinture chauffante interne (100) de secteurs de maintien (110) comportant chacun une vessie (120) gonflable, l'abradable (80) et la ceinture chauffante interne (100) étant intégralement pris en sandwich entre le carter de soufflante (60) et les vessies (120), les secteurs de maintien (110) étant eux-mêmes maintenus en place par une pluralité de brides (125) attachées au carter de soufflante (60) par les points de fixation (96) ;
g. raccordement des vessies à une source commune de pression d'air (130) et raccordement de la ceinture chauffante interne (100) à une alimentation électrique régulée (140), mise en pression des vessies (120) et chauffage de la colle selon un cycle aux conditions de température et de pression adapté à la colle utilisée et à la conductibilité thermique du carter de soufflante (60) ;
h. refroidissement et enlèvement des secteurs de maintien et de la ceinture chauffante interne (100).

2. Procédé selon la revendication 1 **caractérisé en ce que** le nombre de secteurs de maintien est au moins égal à trois.

3. Procédé selon la revendication 1 ou 2 **caractérisé en ce que** pendant le cycle thermique, on contrôle la température de collage à l'aide d'au moins une sonde de température interne (102) disposée à l'intérieur de la ceinture chauffante interne (100), la sonde de température interne (102) étant connectée à des moyens de mesure et de régulation de température (134).

4. Procédé selon l'une quelconque des revendications 1 à 3, le carter de soufflante (60) comportant une paroi externe (90), **caractérisé en ce qu'**on dispose au moins une ceinture chauffante (140) dite "externe" sur la paroi externe (90) au droit de l'abradable (80), la ceinture chauffante externe (140) faisant le tour du carter de soufflante (60) et entourant ainsi l'abradable (80), cette ceinture chauffante externe (140) étant connectée à une source d'alimentation électrique (132) et chauffée pendant le cycle thermique.

5. Procédé selon la revendication 4, **caractérisé en ce** pendant le cycle thermique, on contrôle également la température de collage à l'aide d'au moins une sonde de température externe (142) disposée contre la ceinture chauffante externe (140), la sonde de température externe (142) étant connectée à des moyens de mesure de température (134).

6. Procédé selon l'une quelconque des revendications 1 à 5, **caractérisé en ce que** la surface d'étanchéité (84) de l'abradable (80) est ensuite usinée.

7. Procédé selon l'une quelconque des revendications 1 à 6, **caractérisé en ce que** l'abradable est usiné avec une fraiseuse attachée à l'arbre (30).

## Claims

1. A method of replacing an abradable portion on the casing of a turbojet fan, the turbojet (10) having a rotary portion (20) of axis (22), this rotary portion (20) itself comprising a shaft (30) having a fan stage (40) attached to its front end, the fan stage itself comprising a hub (42) supporting a plurality of blades (44),
the turbojet (10) also comprising an annular fan casing (60) surrounding the fan stage (40), said fan casing (60) comprising an inside wall (70) against which a likewise annular abradable portion (80) is bonded, bonding surfaces (82,86) of the abradable portion (80) and of the fan casing (60), a sealing surface (84) of the abradable portion (80) opposite from its bonding surface (82), the fan casing (60) having a plurality of fixing points (96), the fan stage (40) having previously been removed,
the method comprising the following operations:
a) removing the worn abradable portion (80);
b) preparing a new abradable portion (80);
c) applying adhesive to the bonding surfaces (82, 86) of the fan casing (60), said bonding surfaces (82, 86) having previously been cleaned;
**characterized in that** the method comprises the following operations:
d) applying the abradable portion (80) against the inside wall (70) of the fan casing (60);
f) putting an "inside" heating belt (100) into place against the sealing surface (84) of the abradable portion (80), the inside heating belt (100) completely covering the abradable portion (80);
g) putting holding sectors (110) into place against the inside heating belt (100), each holding sector including an inflatable bladder (120), the abradable portion (80) and the inside heating belt (100) being sandwiched in full between the fan casing (60) and the bladders (120), the holding sectors (110) themselves being held in place by a plurality of straps (125) attached to the fan casing (60) by the fixing pints (96);
h) connecting the bladders to a common source (130) of air under pressure and connecting the inside heating belt (100) to a regulated electrical power supply (140), pressurizing the bladders (120), and heating the adhesive in application of a cycle of temperature and pressure conditions that is adapted to the adhesive used and to the thermal conductivity of the fan casing (60); and
i) cooling and removing the holding sectors and the inside heating belt (100).

2. A method according to claim 1, **characterized in that** the number of holding sectors is not less than three.

3. A method according to claim 1 or claim 2, **characterized in that** during the thermal cycle, the temperature of the adhesive is monitored by means of at least one inside temperature probe (102) placed inside the inside heating belt (100), the inside temperature probe (102) being connected to means (134) for measuring and regulating temperature.

4. A method according to any one of claims 1 to 3, the fan casing (60) including an outside wall (90), the method being **characterized in that** at least one "outside" heating belt (140) is placed against the outside wall (90) in register with the abradable portion (80), the outside heating belt (140) extending right aground the fan caring (60) and thus surrounding the abradable portion (80), said outside heating belt (140) being connected to an electrical power supply (132) and being heated during the thermal cycle.

5. A method according to claim 4, **characterized in that** during the thermal cycle, the temperature of adhesive is also controlled using at least one outside temperature probe (142) disposed against the outside heating belt (140), the outside temperature probe (142) being connected to the temperature measuring means (134).

6. A method according to any one of claims 1 to 5, **characterized in that** the sealing surface (84) of the abradable portion (80) is subsequently machined.

7. A method according to any one of claims 1 to 6, **characterized in that** the abradable portion is machined using a grinder attached to the shaft (30).

## Patentansprüche

1. Verfahren zum Ersetzen einer Abriebbeschichtung an dem Gebläsegehäuse eines Turbostrahltriebwerks, wobei das Turbostrahltriebwerk (10) einen umlaufenden Teil (20) mit der geometrischen Achse (22) umfaßt, wobei dieser umlaufende Teil (20) selbst eine Welle (30) umfaßt, an deren vorderen Bereich eine Gebläsestufe (40) angebracht ist, die selbst eine Nabe (42) umfaßt, welche eine Vielzahl von Schaufeln (44) trägt,
wobei das Turbostrahltriebwerk (10) auch ein ringförmiges Gebläsegehäuse (60) umfaßt, das die Gebläsestufe (40) umgibt, wobei dieses Gebläsegehäuse (60) eine Innenwand (70) umfaßt, auf die eine ebenfalls ringförmige Abriebbeschichtung (80) aufgeklebt ist, Klebeflächen (82, 86) der Abriebbeschichtung (80) und des Gebläsegehäuses (60), eine Dichtungsfläche (84) der Abriebbeschichtung (80), die ihrer Klebefläche (82) gegenüberliegt, wobei das Gebläsegehäuse (60) eine Vielzahl von Befestigungsstellen (96) umfaßt, wobei die Gebläsestufe (40) zuvor ausgebaut worden ist,
umfassend die folgenden Arbeitsschritte:
a. Entfernen der abgenutzten Abriebbeschichtung (80),
b. Vorbereiten einer neuen Abriebbeschichtung (80),
c. Beleimen der Klebeflächen (86) des Gebläsegehäuses (60), wobei diese Klebeflächen (82, 86) zuvor gereinigt worden sind,
d. Aufbringen der Abriebbeschichtung (80) auf die Innenwand (70) des Gebläsegehäuses (60),
**dadurch gekennzeichnet, daß** es ferner die folgenden Arbeitsschritte umfaßt:
e. Anbringen eines sogenannten "inneren" Heizgürtels (100) an der Dichtungsfläche (84) der Abriebbeschichtung (80), wobei der innere Heizgürtel (100) die Abriebbeschichtung (80) vollständig bedeckt,
f. Anbringen von Haltesektoren (110) an dem inneren Heizgürtel (100), die jeweils einen aufblasbaren Beutel (120) umfassen, wobei die Abriebbeschichtung (80) und der innere Heizgürtel (100) zwischen dem Gebläsegehäuse (60) und den Beuteln (120) vollständig sandwichartig angeordnet sind, wobei die Haltesektoren (110) selbst durch eine von Flanschen (125), die die Befestigungsstellen (96) an dem Gebläsegehäuse (60) befestigt an Ort und Stelle gehalten sind,
g. Verbinden der Beutel mit einer gemeinsamen Luftdruckquelle (130) und Verbinden des inneren Heizgürtels (100) mit einer regulierten Stromversorgung (132), Druckbeaufschlagen der Beutel (120) und Erhitzen des Leims in einem Zyklus unter Temperatur- und Druckbedingungen, der dem verwendeten Leim und der Wärmeleitfähigkeit des Gebläsegehäuses (60) angepaßt ist,
h. Abkühlen und Entfernen der Haltesektoren sowie des inneren Heizgürtels (100).

2. Verfahren nach Anspruch 1, **dadurch gekennzeichnet, daß** die Anzahl der Haltesektoren wenigstens gleich drei ist.

3. Verfahren nach Anspruch 1 oder 2, **dadurch gekennzeichnet, daß** während des Thermozyklus die Klebetemperatur mit Hilfe wenigstens einer Innentemperatursonde (102), die innerhalb des inneren Heizgürtels (100) angeordnet ist, gemessen wird, wobei die Innentemperatursonde (102) mit Mitteln zum Messen und Regulieren der Temperatur (134) verbunden ist.

4. Verfahren nach einem der Ansprüche 1 bis 3, wobei das Gebläsegehäuse (60) eine Außenwand (90) umfaßt, **dadurch gekennzeichnet, daß** wenigstens ein sogenannter "äußerer" Heizgürtel (140) an der Außenwand (90) gegenüber der Abriebbeschichtung (80) angeordnet wird, wobei der äußere Heizgürtel (140) um das Gebläsegehäuse (60) herum verläuft und somit die Abriebbeschichtung (80) umgibt, wobei dieser äußere Heizgürtel (140) während des Thermozyklus an eine Stromversorgungsquelle (132) angeschlossen ist und erhitzt wird.

5. Verfahren nach Anspruch 4, **dadurch gekennzeichnet, daß** während des Thermozyklus die Klebetemperatur auch mit Hilfe wenigstens einer Außentemperatursonde (142), die an dem äußeren Heizgürtel (140) angeordnet ist, gemessen wird, wobei die Außentemperatursonde (142) mit Temperaturmeßmitteln (134) verbunden ist.

6. Verfahren nach einem der Ansprüche 1 bis 5, **dadurch gekennzeichnet, daß** die Dichtungsfläche (84) der Abriebbeschichtung (80) anschließend bearbeitet wird.

7. Verfahren nach einem der Ansprüche 1 bis 6, **dadurch gekennzeichnet, daß** die Abriebbeschichtung mit einer an der Welle (30) befestigten Fräse bearbeitet wird.
